# EUROPEAN PATENT SPECIFICATION

(11) **EP 3 406 681 B1**
(45) Date of publication and mention of the grant of the patent: **21.10.2020**
(21) Application number: 17180153.3
(22) Date of filing: 07.07.2017
(51) Int. Cl.: C09J 7/20, C09J 7/38, B32B 33/00

(54) **ADHESIVE TAPE**
KLEBEBAND
RUBAN ADHÉSIF

(30) Priority: 24.05.2017 TW 106207399 U
(43) Date of publication of application: 28.11.2018
(73) Proprietor: Lin, Shih-Fong, New Taipei City (TW)
(72) Inventor: Lin, Shih-Fong, New Taipei City (TW)
(74) Representative: Horak, Michael

(56) References cited:
- EP-A2- 1 285 954
- JP-A- H08 269 410
- JP-A- 2005 008 778
- JP-A- 2005 010 537

## Description

### (a) Technical Field of the Invention

The present invention is related to a tape for adhesively attaching onto an object, in particular, to a structure capable of removing a tape adhesively attached onto an object neatly and conveniently.

### (b) Description of the Prior Art

Generally, tapes are used for adhesively attaching the gap between two box covers of a package box or bag, or the gap between the box cover and the box main body, or the gap between the package box and the folding parts during the sealing of the package box. A conventional tape typically includes one side of the tape substrate completely coated with an adhesive layer; therefore, when the tape is attached onto a package box or bag, the adhesive layer of the tape is completely adhered onto the box main body, box cover or the surface of the package box. Consequently, to open the package box cover, since the edge of the tape is completely adhered onto the package box, it cannot be removed from the package box surface, and consumers often require to use knives to cut the tape at the sealing portion or to rip off the tape forcefully, which tends to cause damages on the surface of the package box cover. In addition, after using knives to cut open the sealing, since the tape cannot be removed with ease, the plastic material of the tape is often left on the surface of the box cover, making it inconvenient for recycling and reuse of paper package boxes.

Prior art documents in this field are known. JP 2005 008778 A discloses a tape with easy peeling suitable for sealing of various container packaging. The tape of JP 2005 008778 A has a substrate having a surface on which an adhesive layer is coated on a partial area thereof to form a guidance peeling strip uncoated with the adhesive layer.

EP 1 285 954 A2 discloses an adhesive tape comprising a substrate and an adhesive agent layer formed on one surface of the substrate. A shape of non-adhesive section is formed in a length direction of the adhesive tape.

JP 2005 0105537 discloses a tape for adhering a container packaging. The tape has a non-adhesive part along the long edges.

JP H08 269410 A discloses a pressure-sensitive adhesive tape having a non-adhesive portion provided alongside of the tape.

However, these prior art documents do not teach an adhesive tape having a guidance peeling strip that has a side edge that is of a non-linear contour for indicating a peeling site.

### SUMMARY OF THE INVENTION

An objective of the present invention is to overcome the aforementioned drawbacks of known tapes in order to facilitate the sealing of tapes, to facilitate the removal of tapes and to allow the recycling and reuse processes of paper package boxes or bags more convenient.

The technical features of the present invention rely in at least that a first surface and a second surface of a tape substrate are coated with an adhesive layer and a release layer respectively. The adhesive layer is coated at a partial area on a width direction of the first surface of the substrate in order to allow a guidance peeling strip of a small width to be continuously formed on the width direction of the first surface from at least one side edge of the substrate toward another side edge in an opposite direction and extending along a length direction of substrate continuously. Therefore, after the tape is adhesively attached onto the package box cover for sealing gaps, the tape can be easily removed from the box neatly.

In view of the above, the present invention provides a tape with quick and neat removal from a package box cover seal, and technique is to provide an elongated substrate, and the substrate includes a first surface and a second surface facing toward each other, the first surface includes an adhesive layer coated continuously thereon along a length direction of the substrate, and the second surface includes a release layer coated continuously thereon along the length direction thereof. In addition, the adhesive layer is coated on a partial area at a width direction of the first surface of the substrate in order to allow the first surface to continuously form a guidance peeling strip of a small width and uncoated with the adhesive layer on the width direction from at least one side edge of the substrate to another side edge in an opposite direction thereof and extending along the length direction of the substrate.

In another embodiment of the present invention, a guidance peeling strip of a small width and uncoated with the adhesive layer is continuously formed on the width direction of the first surface from two opposite side edges of the substrate toward another side edges in opposite directions respectively.

Preferably, the small width of the guidance peeling strip is smaller than a width of the adhesive layer.

In one embodiment of the present invention, the second surface of the substrate corresponding to a location of the guidance peeling strip is formed of a plurality of indicative labels.

Preferably, the indicative labels refer to an image, a symbol or a color for identifying the guidance peeling strip.

With the consideration on allowing users to easily identify the location of the guidance peeling strip and the purpose of decorating the tape, the side edge of the substrate along a length direction of the guidance peeling strip is formed into a non-linear shape.

Preferably, the non-linear shape arranged at the side edge of the length direction of the guidance peeling strip can be of a wave shape.

According to the tape of the present invention, when the tape of the present invention is adhesively attached onto a package box or bag, the guidance peeling strip uncoated with the adhesive gel is not adhered onto the surface of the package box or bag such that when there is a need to open up the package box or bag, the guidance peeling strip can be quickly and conveniently stripped off in order to allow the tape to be neatly removed.

### BRIEF DESCRIPTION OF THE DRAWINGS

FIG. 1 is a perspective view showing an embodiment of the first surface of the tape substrate of the present invention partially coated with the adhesive layer;
FIG. 2 is a perspective view showing an embodiment of the first surface of the tape substrate of the present invention completely coated with the release layer;
FIG. 3 is a perspective view showing an embodiment of the tape structure of the present invention along the III-III direction in FIG. 1;
FIG. 4 is a perspective view showing the two sides of the first surface of the tape substrate of the present invention are both provided with the guidance peeling strips and indicative labels are disposed on the guidance peeling strips;
FIG. 5 is a perspective view showing the wave shape formed at the side edges of the guidance peeling strips of the tape substrate of the present invention;
FIG. 6 is a perspective view showing the tape of the present invention provided with the guidance peeling strip formed at one single side and wrapped into a roll;
FIG. 7 is a perspective view showing the tape of the present invention provided with the guidance peeling strip formed at two sides and wrapped into a roll;
FIG. 8 is a perspective view showing the tape of the present invention adhesively attached onto a package box; and
FIG. 9 is a perspective view showing the tape adhesively attached onto the package box in FIG. 8 is removed.

### DETAILED DESCRIPTION OF THE PREFERRED EMBODIMENTS

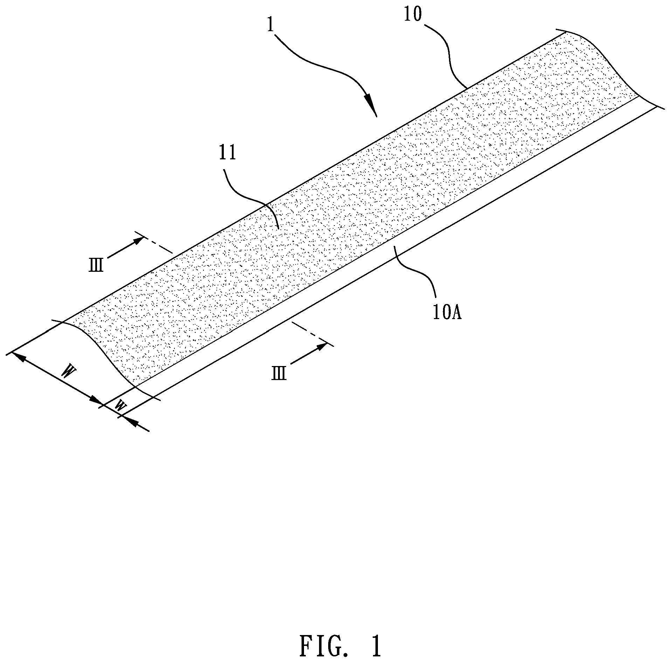

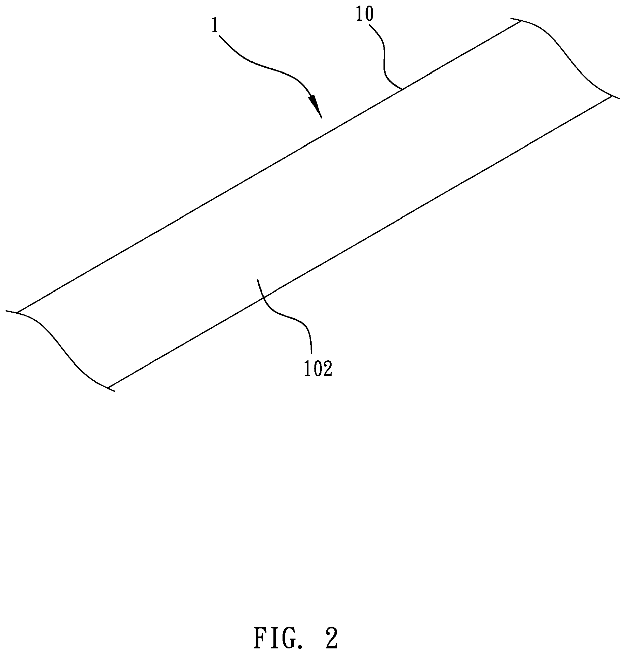

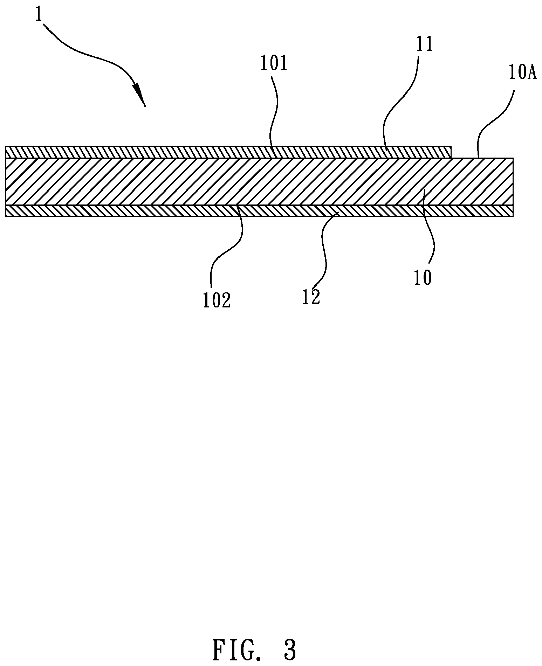

As shown in FIG. 1 to FIG. 3, the present invention provides a tape with quick and neat removal from a package box cover seal. According to a preferred embodiment of the present invention, a tape 1 comprises an elongated substrate 10, and the substrate 10 can be a continuous extension of elongated thin film made of any appropriate material such as the plastic film material, high fiber paper material, aluminum material etc. The elongated film substrate 10 includes a first surface 101 and a second surface 102 facing toward each other. In addition, the first surface 101 includes an adhesive layer 11 coated continuously thereon along a length direction of the substrate 10, and the second surface 102 includes a release layer 12 coated continuously thereon along the length direction of the substrate 10.

In addition, the release layer 12 is coated during the automatic manufacturing of the tape in the factory, and its purpose is that after the tape 1 is wrapped in a roll, the adhesive layer 11 can be attached onto the release layer 12 in order to allow the adhesive layer 11 to be removed from the release layer 12.

Similarly, as shown in FIG. 1 to FIG. 3, preferably, in the present invention, the adhesive layer 11 is coated at a partial area on a width direction of the first surface 101 of the substrate 10 in order to allow the first surface 101 to continuously form a guidance peeling strip 10A of a small width "w" and uncoated with the adhesive layer on the width direction from at least one side edge of the substrate 10 to another side edge in an opposite direction thereof and extending along the length direction of the substrate 10. To be more specific, the guidance peeling strip 10A is formed on a partial area not coated with the adhesive layer on the first surface 101 of the substrate 10, and such partial area continuously extends along the length direction of one side edge closely adjacent to the length direction of the substrate 10. Furthermore, the width "w" of the guidance peeling strip 10A is smaller than the width "W" of the adhesive layer 11.

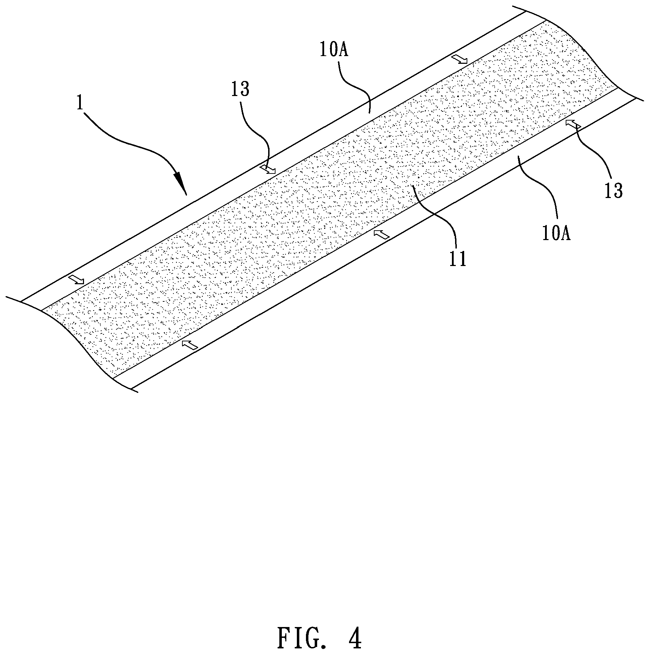

In addition, in another embodiment of the present invention, a guidance peeling strip 10A (as shown in FIG. 4) of a small width "w" and uncoated with the adhesive layer can be continuously formed on the width direction of the first surface 101 from two opposite side edges of the substrate 10 toward another side edges in opposite directions respectively.

Furthermore, to allow users to easily identify the location of the guidance peeling strip 10A during the removal of the adhesive tape, in an embodiment of the present invention, the second surface 102 of the substrate 10 corresponding to a location of the guidance peeling strip 10A can be formed of a plurality of indicative labels 13 (as shown in FIG. 4). The indicative labels 13 can be an image, a symbol or a color for identifying the guidance peeling tape 10A. For example, the indicative label as shown in FIG. 4 is an arrow image, and its arrow direction points from the guidance peeling strip 10A toward the adhesive layer 11 in order to allow users to intuitively know the direction for the start of the removal of the guidance peeling strip 10A.

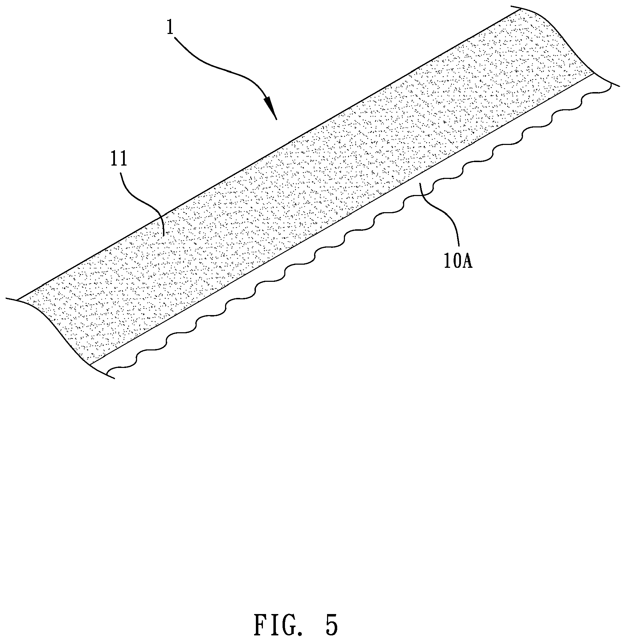

According to the present invention the side edge of the substrate along a length direction of the guidance peeling strip 10A is formed into a non-linear shape, such as the wave shape as shown in FIG. 5.

Accordingly, the side edge of the guidance peeling strip 10A can be formed into a special non-linear shape for replacing the indicative label 13 previously mentioned in order to achieve the identical function and purpose of providing indications to users for the guidance peeling strip 10A.

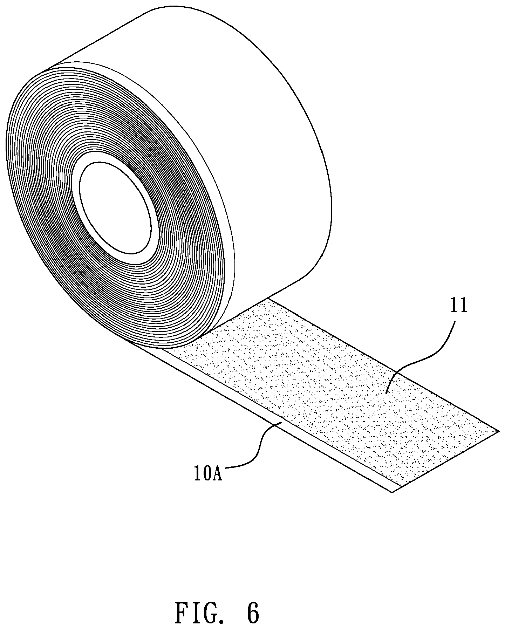

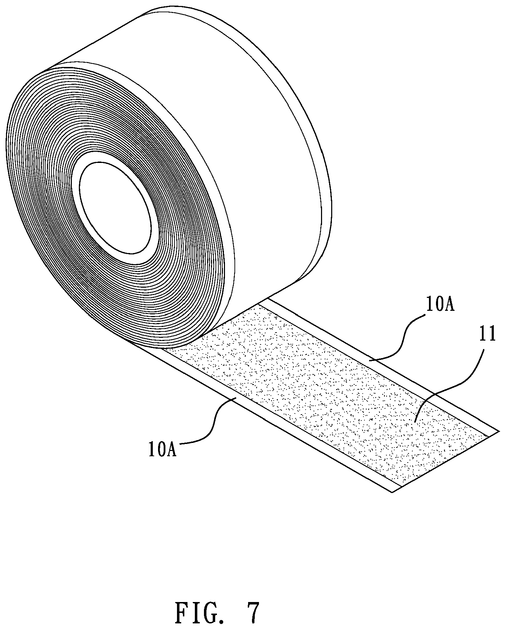

FIG. 6 and FIG. 7 are perspective views showing the tape of the present invention having one single side and both sides formed of the guidance peeling strip thereon respectively and wrapped in a roll. The tape wrapped in a roll is applicable to be installed on a tape holder (not shown in the drawings) in order to perform adhesive sealing on package boxes 2 or package bags.

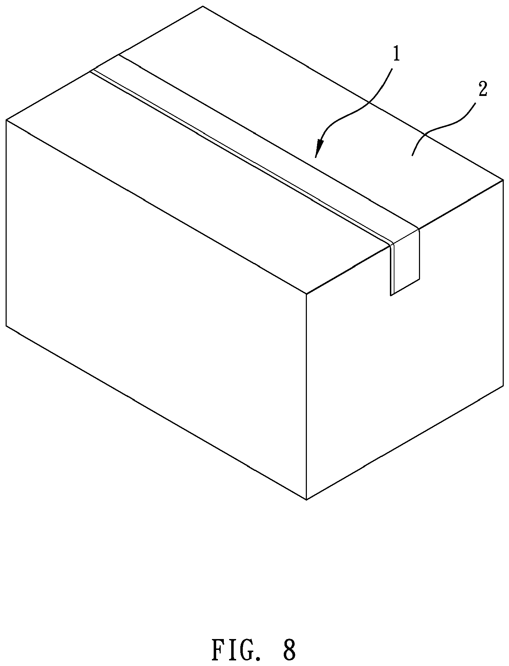

As shown in FIG. 8, the method of attaching the tape 1 of the present invention onto a package box 2 is identical to the method of conventional tapes, in which both are to adhesively attach the tape 1 onto the gap between two box covers of the package box 2, or the gap between box cover and box main body (not shown in the drawings), or the gag between the bag main body and folding part of a package bag (not shown in the drawings) in order to seal and secure the package box or bag.

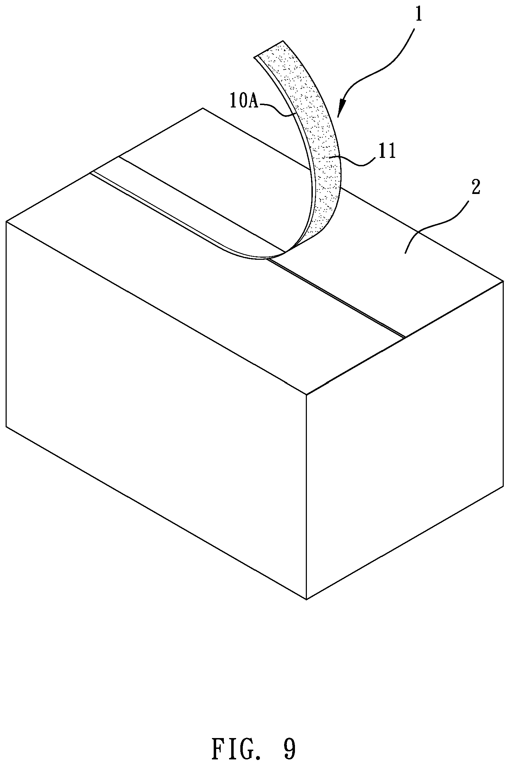

As shown in FIG. 9, when a consumer wishes to open up the package box, he or she only needs to find the location of the guidance peeling strip 10A in order to strip off the guidance peeling tape not adhered onto the box, and then the tape 1 can be directly removed from the package box 2 along the length direction of the tape 1 completely and neatly. In particular, when the guidance peeling strip 10A is provided with the indicative label 13 or when the side edge is formed of a special non-linear shape, it is able to allow the consumer to locate the guidance peeling strip 10A for stripping it off quickly. As a result, the overall operation is convenient and fast while the package box or bag is not damaged. Furthermore, since the tape 1 is not remained on the package box or bag, it is advantageous to the process of recycling and reuse of used package boxes or bags.

## Claims

1. A tape with quick and neat removal from a package box cover seal, comprising an elongated substrate (10), and the substrate (10) having a first surface (101) and a second surface (102) facing toward each other, the first surface (101) having an adhesive layer (11) coated continuously thereon along a length direction of the substrate (10), and the second surface (102) having a release layer (12) coated continuously thereon along the length direction thereof,
wherein the adhesive layer (11) is coated at a partial area on a width direction of the first surface (101) of the substrate (10) in order to allow the first surface (101) to continuously form a guidance peeling strip (10A) of a small width (w) and uncoated with the adhesive layer (11) on the width direction from at least one side edge of the substrate (10) to another side edge in an opposite direction thereof and extending along the length direction of the substrate (10), **characterized in that**:
wherein the side edge of the substrate (10) along a length direction of the guidance peeling strip (10A) is formed into a non-linear shape.

2. The tape according to claim 1, wherein a guidance peeling strip (10A) of a small width (w) and uncoated with the adhesive layer is continuously formed on the width direction of the first surface (101) from two opposite side edges of the substrate (10) toward another side edges in opposite directions respectively.

3. The tape according to claim 1 or 2, wherein the small width (w) of the guidance peeling strip (10A) is smaller than a width (W) of the adhesive layer (11).

4. The according to claim 1, wherein the non-linear shape is a wave shape.

## Patentansprüche

1. Band mit schneller und sauberer Entfernung von einer Verpackungspaketabdeckungsdichtung, mit einem verlängerten Substrat (10), wobei das Substrat (10) eine erste Oberfläche (101) und eine zweite Oberfläche (102) umfasst, die einander zugewandt sind, wobei die erste Oberfläche (101) eine Klebeschicht (11) umfasst, die kontinuierlich entlang einer Längsrichtung des Substrats (10) darauf aufgetragen ist, und die zweite Oberfläche (102) eine Trennschicht (12) umfasst, die kontinuierlich entlang ihrer Längsrichtung darauf aufgetragen ist,
wobei die Klebeschicht (11) in einem Teilbereich in einer Breitenrichtung der ersten Oberfläche (101) des Substrats (10) aufgetragen ist, damit die erste Oberfläche (101) kontinuierlich einen Führungsschälstreifen (10A) von geringer Breite (w) bilden kann, der mit der Klebeschicht (11) in der Breitenrichtung von mindestens einer Seitenkante des Substrats (10) zu einer anderen Seitenkante in einer entgegengesetzten Richtung davon unbeschichtet ist und welcher entlang der Längsrichtung des Substrats (10) verläuft, **dadurch gekennzeichnet, dass**:
die Seitenkante des Substrats (10) entlang einer Längsrichtung des Führungsschälstreifens (10A) in einer nichtlinearen Form ausgebildet ist.

2. Band nach Anspruch 1, wobei ein Führungsschälstreifen (10A) mit einer geringen Breite (w) und unbeschichtet mit der Klebeschicht, kontinuierlich in der Breitenrichtung der ersten Oberfläche (101) von zwei entgegengesetzten Seitenkanten des Substrats (10) bis zu jeweils anderen Seitenkanten in entgegengesetzten Richtungen gebildet wird.

3. Band nach Anspruch 1 oder 2, wobei die geringe Breite (w) des Führungsschälstreifens (10A) kleiner als eine Breite (W) der Klebeschicht (11) ist.

4. Band nach Anspruch 1, wobei die nichtlineare Form eine Wellenform ist.

## Revendications

1. Ruban à enlèvement rapide et net d'un couvercle de boîte d'emballage, comprenant un substrat allongé (10), et le substrat (10) ayant une première surface (101) et une deuxième surface (102) l'une en face de l'autre, la première surface (101) étant recouverte d'une couche adhésive (11) de façon continue dans le sens de la longueur du substrat (10), et la deuxième surface (102) étant recouverte d'une couche de dégagement (12) de façon continue dans le sens de la longueur de celle-ci,
où la couche adhésive (11) est recouverte en partie vers la largeur de la première surface (101) du substrat (10) afin de permettre à la première surface (101) de former continuellement une bande de retrait pour le maniement (10A) d'un petite largeur (w) et non revêtue avec la couche adhésive (11) dans le sens de la largeur d'au moins un bord latéral du substrat (10) à un autre bord latéral dans une direction opposée de celle-ci et s'étendant tout le long dans le sens de la longueur du substrat (10), **caractérisé en ce que** :
le bord latéral du substrat (10) sur toute la longueur de la bande de retrait pour le maniement (10A) est formé dans une forme non-linéaire.

2. Ruban selon la revendication 1, où une bande de retrait pour le maniement (10A) d'une petite largeur (w) et non revêtue avec la couche adhésive est formée de façon continue dans le sens de la largeur de la première surface (101) depuis deux bords de côtés opposés du substrat (10) vers un autre côté de bords dans des directions opposées respectivement.

3. Ruban selon la revendication 1 ou 2, où la petite largeur (w) de la bande de retrait pour le maniement (10A) est plus petite qu'une largeur (W) de la couche adhésive (11).

4. Ruban selon la revendication 1, où la forme non-linéaire est de forme ondulée.
